# EUROPÄISCHE PATENTANMELDUNG

(11) **EP 3 527 359 A1**
(43) Veröffentlichungstag der Anmeldung: **21.08.2019**
(21) Anmeldenummer: 18156686.0
(22) Anmeldetag: 14.02.2018
(51) Int. Cl.: B29D 99/00, B33Y 80/00, B29C 59/02

(54) **VERFAHREN UND VORRICHTUNG ZUR STRUKTURIERUNG EINER OBERFLÄCHE FÜR EIN PRÄGEWERKZEUG**

(71) Anmelder: AKK GmbH, 47809 Krefeld (DE)
(72) Erfinder: Kesper, Peer, 47800 Krefeld (DE)
(74) Vertreter: Cohausz & Florack

(57) **Zusammenfassung**

Die Erfindung betrifft ein Verfahren zum Strukturieren einer Oberfläche für ein Prägewerkzeug, bei dem ein Werkzeugrohling mit einer Oberfläche (8) bereitgestellt wird und bei dem auf der Oberfläche (8) des Werkzeugrohlings eine Prägestruktur ausgebildet wird, welche zur Prägung eines vorgegebenen Materials vorgesehen ist. Die Aufgabe, ein Verfahren zum Strukturieren einer Oberfläche für ein Prägewerkzeug vorzuschlagen, wobei eine prozessgenaue Strukturierung, insbesondere mit hoher Auflösung, und eine Vereinfachung des Verfahrens erreicht wird, wird dadurch gelöst, dass mit einem 3D-Druckverfahren Strukturmaterial auf den Werkzeugrohling aufgedruckt wird, um die Prägestruktur bereitzustellen und die Prägestruktur das über das 3D-Druckverfahren aufgedruckte Strukturmaterial umfasst. Die Erfindung betrifft weiter ein Prägewerkzeug, eine Vorrichtung zum Strukturieren einer Oberfläche für ein Prägewerkzeug sowie eine digitale Druckvorlage.

## Beschreibung

Die Erfindung betrifft ein Verfahren zum Strukturieren einer Oberfläche für ein Prägewerkzeug, bei dem ein Werkzeugrohling mit einer Oberfläche bereitgestellt wird und bei dem auf der Oberfläche des Werkzeugrohlings eine Prägestruktur ausgebildet wird, welche zur Prägung eines vorgegebenen Materials vorgesehen ist. Die Erfindung betrifft weiter ein Prägewerkzeug zur Prägung eines vorgegebenen Materials, wobei das Prägewerkzeug insbesondere über das erfindungsgemäße Verfahren strukturiert wurde, mit einer auf einer Oberfläche ausgebildeten Prägestruktur, welche zur Prägung eines vorgegebenen Materials vorgesehen ist. Zudem wird eine Vorrichtung zum Strukturieren einer Oberfläche für ein Prägewerkzeug offenbart, insbesondere unter Anwendung des erfindungsgemäßen Verfahrens, die Vorrichtung umfassend: Aufnahmemittel zur Aufnahme eines Werkzeugrohling mit einer Oberfläche und Strukturierungsmittel zum Strukturieren der Oberfläche. Weiter betrifft die Erfindung eine digitale Druckvorlage.

Die Oberflächen von Prägewerkzeugen werden mit Vertiefungen zur Bereitstellung einer Prägestruktur strukturiert. Die Vertiefungen müssen eine bestimmte Auflösung für die Prägestruktur aufweisen und auch eine Form bzw. ein Tiefenprofil aufweisen, welches eine Prägung auf einem vorgegebenen Material erlaubt. Die Vertiefungen von Prägewerkzeugen sind üblicherweise komplex geformt, d.h. die Vertiefungen weisen ein Profil bzw. Tiefenprofil auf, welches sich mit dem Abstand zur ursprünglichen Oberfläche verändert, beispielsweise verjüngt, um eine prozesssichere Prägung zu gewährleisten. Für bestimmte Prägeverfahren muss die Prägestruktur auch mit einer ausreichend hohen Auflösung bereitgestellt werden, um eine hohe Qualität des Prägebilds auf dem zu prägenden Material sicherzustellen.

Eine weitere Anforderung an die Oberfläche eines Prägewerkzeugs ist zudem üblicherweise eine ausreichend hohe Härte zur Prägung eines vorgegebenen Materials, insbesondere zur Prägung härterer Materialien, um eine lange Lebensdauer der Prägestruktur zu gewährleisten.

Zur Strukturierung der Oberfläche von Prägewerkzeugen sind verschiedene Verfahren bekannt. Einerseits können ätztechnische Methoden verwendet werden. Hierbei wird beispielsweise zunächst eine flächendeckende Schablonenschicht aus einem fotosensitiven Material auf die Oberfläche aufgebracht. Die Schablonenschicht wird selektiv belichtet, womit die Löslichkeit der belichteten Bereiche der Schablonenschicht verändert wird. Durch die anschließende Ablösung von Teilbereichen der Schablonenschicht mit einem Lösemittel wird die Schablonenschicht strukturiert. Eine ätztechnische Behandlung der Oberfläche wird vorgenommen, mit welcher die Teilbereiche der Oberfläche, welche nicht von der Schablonenschicht (bzw. einem Ätzresist) abgedeckt werden, selektiv geätzt werden. Entsprechende ätztechnische Methoden sind jedoch oft nicht für hohe Prozessgeschwindigkeiten geeignet und im Hinblick auf die erforderliche feine Prägestruktur zum Teil zu ungenau.

Zur Steigerung der Prozessgeschwindigkeit kann alternativ die Oberfläche mechanisch bearbeitet werden, wobei die Vertiefungen durch eine mechanische Gravur mittels eines Stichels eingebracht werden. Eine elektromechanische Gravur kann beispielsweise auf Grundlage einer Vorlage, die gleichzeitig abgetastet wird, oder auch computerbasiert ausgeführt werden. Ebenso ist es bekannt, eine Prägestruktur eines Prägewerkzeugs mittels einer Lasergravur direkt in eine Oberfläche einzubringen. Entsprechende Vorrichtungen für elektromechanische oder lasertechnische Gravuren sind jedoch oft aufwändig und kostenintensiv. Zudem können hohe Oberflächengeschwindigkeiten vorliegen und mit eventuellen Unwuchten verbunden sein.

Ausgehend von diesem Stand der Technik liegt der Erfindung die Aufgabe zugrunde, ein Verfahren zum Strukturieren einer Oberfläche für ein Prägewerkzeug vorzuschlagen, wobei eine prozessgenaue Strukturierung, insbesondere mit hoher Auflösung, und eine Vereinfachung des Verfahrens erreicht wird. Weiter soll ein Prägewerkzeug und eine Vorrichtung sowie eine digitale Druckvorlage zur Durchführung eines solchen Verfahrens angegeben werden.

Gemäß der ersten Lehre der Erfindung wird die oben genannten Aufgabe betreffend ein Verfahren zum Strukturieren einer Oberfläche für ein Prägewerkzeug dadurch gelöst, dass mit einem 3D-Druckverfahren Strukturmaterial auf den Werkzeugrohling aufgedruckt wird, um die Prägestruktur bereitzustellen und die Prägestruktur das über das 3D-Druckverfahren aufgedruckte Strukturmaterial umfasst.

Ein Werkzeugrohling kann insbesondere als Walze, Walzenmantel bzw. Sleeve und/oder Platte ausgestaltet sein und eine Oberfläche aufweisen, welche zur Ausgestaltung mit einer Prägestruktur geeignet ist. Ein Werkzeugrohling kann teilweise oder ganz aus Metall und/oder Metallverbindung bestehen und insbesondere eine metallische Oberfläche aufweisen, beispielsweise eine Oberfläche basierend auf Fe, Cr, Ni, Cu und/oder Zn bzw. deren Verbindungen oder auch Stahl.

Eine Prägestruktur wird auf der Oberfläche des Werkzeugrohlings ausgebildet, welche zur Prägung eines vorgegebenen Materials vorgesehen ist. Die Prägestruktur kann beispielsweise ein Muster von Vertiefungen bzw. Erhebungen wiedergeben, welches ein bestimmtes Prägebild in dem vorgegebenen Material hervorrufen soll. Die Prägestruktur kann insbesondere als Negativ des vorgesehenen Prägebilds im vorgegebenen Material vorgesehen sein, so dass beispielsweise Erhebungen in der Prägestruktur nach einer Prägung über das Prägewerkzeug Vertiefungen im vorgegebenen Material erzeugen. Die Prägestruktur weist insbesondere ein Profil bzw. Tiefenprofil auf, welches sich mit dem Abstand zur Oberfläche des Werkzeugrohlings (d.h. zur ursprünglichen Oberfläche des Werkzeugrohlings vor der Strukturierung) verändert, beispielsweise verjüngt oder erweitert. Vorzugsweise erweitert sich das Tiefenprofil von Erhebungen in der Prägestruktur zur Oberfläche des Werkzeugrohlings hin, so dass sich die entsprechenden Vertiefungen in dieser Richtung verjüngen.

Mit einem 3D-Druckverfahren wird Strukturmaterial auf den Werkzeugrohling aufgedruckt, um die Prägestruktur bereitzustellen. Folglich kann die Prägestruktur direkt über ein 3D-Druckverfahren bereitgestellt werden, womit die Strukturierung erheblich vereinfacht wird. Dadurch, dass die Prägestruktur das über das 3D-Druckverfahren aufgedruckte Strukturmaterial umfasst, kann die Flexibilität und Genauigkeit des 3D-Druckverfahrens zur Bereitstellung der Prägestruktur herangezogen werden. Strukturmaterial kann selektiv auf den Werkzeugrohling aufgedruckt werden, so dass das aufgedruckte Material bereits während des Drucks entsprechend der vorgesehenen Prägestruktur konturiert wird. Insbesondere kann die Prägestruktur bereits mit dem Aufdrucken die endgültige Konturierung für eine spätere Verwendung im Prägewerkzeug erhalten (ggf. abgesehen von einer unten beschriebenen Beschichtung des aufgedruckten Strukturmaterials).

Dass die Prägestruktur das über das 3D-Druckverfahren aufgedruckte Strukturmaterial umfasst, ist insbesondere derart zu verstehen, dass das aufgedruckte Strukturmaterial teilweise oder gänzlich zwischen der Oberfläche des Werkzeugrohlings und der äußeren Oberfläche der Prägestruktur angeordnet ist. Das aufgedruckte Strukturmaterial kann somit teilweise oder gänzlich zwischen der der ursprünglichen Oberfläche des Werkzeugrohlings vor der Strukturierung und der äußeren Oberfläche der Prägestruktur angeordnet sein, wobei die äußere Oberfläche der Prägestruktur zur Prägung des vorgegebenen Materials vorgesehen ist (bzw. wobei die äußere Oberfläche der Prägestruktur dafür vorgesehen ist, bei einer Prägung in Kontakt zum vorgegebenen Material gebracht zu werden). Beispielsweise werden über das 3D-Druckverfahren Erhebungen auf der Oberfläche ausgebildet bzw. Erhebungen werden (unmittelbar) aufgedruckt, welche eine Prägestruktur bilden. Die Erhebungen, welche eine Prägestruktur bilden, können zumindest teilweise das auf die Oberfläche aufgedruckte Strukturmaterial umfassen oder hieraus bestehen.

Mit dem Aufdrucken des Strukturmaterials über ein 3D-Druckverfahren wird somit (ggf. unmittelbar) die Prägestruktur bereitgestellt bzw. aufgedruckt. Das aufgedruckte Strukturmaterial kann somit zumindest teilweise das Negativ des vorgesehenen Prägebilds im vorgegebenen Material ausbilden, so dass beispielsweise aufgedruckte Erhebungen der Prägestruktur nach einer Prägung über das Prägewerkzeug Vertiefungen im vorgegebenen Material erzeugen. Folglich können weitere Verfahrensschritte entfallen, wie diese beispielsweise beim Aufdrucken einer Schablone entstehen. Bei einer Schablone für chemische Behandlungen der Oberfläche wie einer ätztechnischen Schablone erfordert die Strukturierung der Oberfläche noch mindestens einen chemischen Behandlungsschritt der Oberfläche sowie einen weiteren Schritt zum Ablösen der Schablone. Entsprechende Schritte können beim erfindungsgemäßen Verfahren entfallen, da insbesondere das aufgedruckte Material auf der Oberfläche des Prägewerkzeugs verbleibt. Entsprechend kann die Strukturierung frei von der Verwendung von Schablonen durchgeführt werden. Auch müssen bei ätztechnischen Methoden zur Herstellung komplexer Strukturierungen oft das Aufbringen einer Schablone und ein chemischer Behandlungsschritt mehrfach wiederholt werden. Mit dem vorliegenden Verfahren kann eine komplexe Strukturierung über ein Aufdrucken des Strukturmaterials vereinfacht werden.

Das Aufdrucken des Strukturmaterials über ein 3D-Druckverfahren, wobei die Prägestruktur das über das 3D-Druckverfahren aufgedruckte Strukturmaterial umfasst, bedeutet insbesondere auch, dass die Prägestruktur über einen Aufbau von Material auf dem Werkzeugrohling bereitgestellt wird. Dies steht im Gegensatz zu den eingangs erwähnten Verfahren, welche auf einer Abtragung des Materials vom Werkzeugrohling beruhen. Folglich hat das erfindungsgemäße Verfahren auch den Vorteil, dass die Prägestruktur unter Einsparung von Material bereitgestellt werden kann.

Das 3D-Druckverfahren zum Aufdrucken des Strukturmaterials kann insbesondere Teil einer additiven Fertigungsverfahrens (oder auch eines generativen Fertigungsverfahrens) sein bzw. eine additive/generative Fertigung umfassen. Strukturmaterial kann selektiv auf die Oberfläche gedruckt werden. Verschiedene Ausgestaltungen des 3D-Druckverfahrens sind denkbar. Strukturmaterial kann aus dem flüssigen, plastischen, körnigen und/oder pulverförmigen Zustand aufgedruckt werden. Beispiele sind selektives Schmelzen und/oder Sintern, insbesondere Elektronenstrahlschmelzen, Laserschmelzen und/oder Lasersintern, Binder Jetting, Fused Deposition Modeling, selektives Auftragsschweißen oder Plattieren, Wax Deposition Modeling, Metallpulver-Auftrag, Elektronenstrahlschweißen, Stereolithographie, selektive Belichtung, Liquid Composite Moulding, Laminated Object Modelling, 3D-Siebdruck insbesondere von Metallen und/oder elektrophoretische Abscheidung.

In einer Ausgestaltung des Verfahrens gemäß dem ersten Aspekt umfasst das über das 3D-Druckverfahren aufgedruckte Strukturmaterial Metall und/oder Metallverbindungen oder besteht hieraus. Entsprechend kann eine Prägestruktur dadurch bereitgestellt werden, dass Metall und/oder Metallverbindungen direkt auf die Oberfläche aufgedruckt wird und insbesondere Erhebungen über das aufgedruckte Metall und/oder die Metallverbindungen gebildet werden. Insbesondere erhält die Prägestruktur bereits mit dem Aufdrucken die endgültige Konturierung für eine spätere Verwendung im Prägewerkzeug, wobei Metall und/oder die Metallverbindungen eine hohe Härte und Beständigkeit zur Verwendung in der Prägung unterschiedlicher Materialien auch bei hohem Prägedruck aufweisen können. Auch können Metalle und/oder Metallverbindungen bei hohen Temperaturen beständig sein, so dass auch bestimmte Heißprägeverfahren hiermit durchgeführt werden können. Das Strukturmaterial kann Fe, Cr, Ni, Cu und/oder Zn bzw. deren Verbindungen umfassen. Insbesondere wird als Strukturmaterial ein Metall bzw. eine Metallverbindung aufgedruckt, aus welchem auch die Oberfläche des Werkzeugrohlings besteht, so dass einheitliche Materialeigenschaften der Prägestruktur entstehen.

In einer weiteren Ausgestaltung des Verfahrens gemäß dem ersten Aspekt umfasst das über das 3D-Druckverfahren aufgedruckte Strukturmaterial einen Kunststoff, ein Wachs, eine UV-härtbare Tinte oder eine Kombination hiervon oder besteht hieraus. Mit Wachs oder einer UV-härtbaren Tinte können hohe Auflösungen bzw. kleine Druckpunkte bereitgestellt werden und somit eine hohe Druckqualität gewährleistet werden. Besonders eine Kombination von Wachs und UV-härtbarer Tinte hat sich für die Strukturierung der Oberfläche als vorteilhaft herausgestellt. Eine solche Kombination kann auch eine für Prägeverfahren ausreichend hohe Temperaturbeständigkeit aufweisen. Das Strukturmaterial weist insbesondere eine pastöse Konsistenz auf, um eine hohe Druckqualität zu gewährleisten. Die Verwendung von Wachs und/oder UV-härtbarer Tinte bedeutet insbesondere gegenüber der Verwendung von Metall und/oder Metallverbindungen eine deutliche Kosteneinsparung bei einer gleichzeitig erreichbaren Steigerung der Prozessgeschwindigkeit und Auflösung.

Insbesondere wird das Strukturmaterial zumindest teilweise in einem Hot-Melt-Verfahren aufgedruckt. Bei einem Hot-Melt-Verfahren wird das aufzudruckende Strukturmaterial in einem Druckkopf erhitzt und verflüssigt, beispielsweise in einem Temperaturbereich von 60 °C bis 120 °C. Tröpfchen des verflüssigten Schablonenmaterials werden dann auf die Oberfläche gebracht bzw. gejettet. Die Tröpfchen kühlen hierbei schon während des Fluges auf die Oberfläche sowie beim Auftreffen ab, so dass das Strukturmaterial auf der Oberfläche der Tiefdruckwalze erstarrt. Ein Hot-Melt-Verfahren wird insbesondere mit Strukturmaterial umfassend eine Kombination von Wachs und UV-härtbarer Tinte durchgeführt.

Das aufgedruckte Strukturmaterial kann während und/oder nach dem Aufdrucken auch einer Härtung unterzogen werden, beispielsweise über Bestrahlung etwa mit UV-Licht, über eine thermische Behandlung, chemische Behandlung und/oder Vernetzung. Das aufgedruckte Strukturmaterial kann nach dem Aufdrucken einer Verchromung unterzogen werden.

In einer weiteren Ausgestaltung des Verfahrens gemäß dem ersten Aspekt wird eine Beschichtung des über das 3D-Druckverfahren aufgedruckten Strukturmaterials und/oder der Oberfläche des Werkzeugrohlings vorgenommen. Über eine Beschichtung kann die mit der Strukturierung entstehende äußere Oberfläche der Prägestruktur, welche zur Prägung des vorgegebenen Materials vorgesehen ist, hinsichtlich der mechanischen und thermischen Eigenschaften eingestellt werden. Insbesondere weist eine Beschichtung eine höhere Härte auf als das aufgedruckte Strukturmaterial, womit die Lebensdauer und Prägequalität der Prägestruktur verbessert wird. Insbesondere wird eine Beschichtung in Verbindung mit einem aufgedruckten Strukturmaterial umfassend einen Kunststoff, ein Wachs, eine UV-härtbare Tinte oder eine Kombination hiervon vorgenommen. Insbesondere eine Kombination von Wachs und UV-härtbarer Tinte weist üblicherweise bereits eine Härte auf, welche prinzipiell zur Prägung von verschiedenen vorgegebenen Materialien geeignet sein kann. Durch eine zusätzliche Beschichtung kann die Oberfläche jedoch weiter veredelt werden. Beschichtungen können insbesondere durch ein Verkupfern, Vernickeln und/oder ein Verchromen gebildet werden.

In einer Ausführungsform wird die Oberfläche bzw. das Strukturmaterial (z. B. umfassend einen Kunststoff, ein Wachs, eine UV-härtbare Tinte oder eine Kombination hiervon) mit 1 µm - 10 µm Ni und/oder Cu, vorzugsweise 2 µm bis 3 µm Ni und/oder Cu beschichtet, und auf der Ni-Schicht und/oder Cu-Schicht eine Cr-Schicht und/oder eine Hartnickelschicht mit einer Dicke von 1 µm bis 20 µm aufgebracht, vorzugsweise 4 µm bis 6µm. Möglich ist es weiter, auf der Beschichtung eine weitere Schicht des Strukturmaterials (z.B. umfassend einen Kunststoff, ein Wachs, eine UV-härtbare Tinte oder eine Kombination hiervon) aufzutragen und insbesondere erneut zu Verchromen, so dass eine besonders glatte Oberfläche erzielt wird bzw. ein hoher Glanzgrad.

Auch können unterschiedliche Bereiche mit verschiedenen Beschichtungen versehen werden. Beispielsweise werden matte und/oder glänzende Bereiche erzielt.

Beispielsweise wird das Strukturmaterial beschichtet und anschließend nur in Teilbereichen erneut mit Strukturmaterial bedruckt.

Eine Beschichtung kann mittels einer elektrochemischen Behandlung aufgebracht werden, etwa einer Galvanisierung. Bei metallischen Eigenschaften der Oberfläche und des aufgedruckten Materials kann ggf. direkt eine Beschichtung elektrochemisch aufgebracht werden. Entsprechend können für eine vorgesehene elektrochemische Behandlung Strukturmaterialien mit metallischen Eigenschaften gewählt werden, beispielsweise auch leitfähige Polymere, Verbundmaterialien bzw. metallisierte Kunststoffe.

Soweit die Oberfläche und/oder das aufgedruckte Strukturmaterial isolierende Eigenschaften aufweisen, kann die die Oberfläche und/oder das aufgedruckte Strukturmaterial vor oder während der elektrochemischen Behandlung metallisiert werden. Beispielsweise wird ein Kunststoff als Strukturmaterial verwendet und metallisiert. Hierbei kann auch eine Kunststoffgalvanisierung vorgenommen werden. Eine Metallisierung umfasst beispielsweise einen optionalen Beizschritt zum Aufrauen der Oberfläche des Strukturmaterials, eine Aktivierung (beispielsweise mit Metallkeimen wie Pd in einem Bad) sowie eine chemische Metallisierung über eine metallische Schicht (beispielsweise eine elektrisch leitfähige Beschichtung aus Cu und/oder Ni). Anschließend kann die Oberfläche galvanisiert werden. Denkbar sind ebenfalls Methoden einer außenstromlosen Beschichtung (electroless plating), insbesondere für isolierende Strukturmaterialien.

Mehrere Schichten können aufgebracht werden, beispielsweise kann einer Verchromung und/oder Vernickelung ein Aufbringen von Cu, Zn und/oder Ni zur Verbesserung der Haftung der verchromten und/oder vernickelten Schicht vorangehen. Insbesondere wird nach dem Aufbringen einer Cu-Schicht auf ein aktiviertes Strukturmaterial eine Zn-Schicht aufgetragen und eine Vernickelung vorgenommen, so dass die äußere Oberfläche der Prägestruktur insbesondere von der vernickelten Schicht gebildet wird.

In einer Ausgestaltung umfasst die Beschichtung Cr, Ni, Cu und/oder Zn. Insbesondere Cr bzw. eine Verchromung ergibt eine besonders harte und beständige Oberfläche für eine Prägestruktur. Cr birgt allerdings Nachteile im Hinblick auf die Handhabung und Umweltverträglichkeit, so dass Ni bzw. eine Vernickelung eine vorteilhafte Alternative zu Cr darstellen kann. Denkbar sind auch Kombinationen von verschiedenen Metallen oder deren Verbindungen in einzelnen oder mehreren Schichten.

In einer weiteren Ausgestaltung des Verfahrens gemäß dem ersten Aspekt umfasst das 3D-Druckverfahren ein schichtweises Aufdrucken des Strukturmaterials. Ein schichtweises Aufdrucken ermöglicht eine besonders prozesssichere und wirtschaftliche Strukturierung der Oberfläche über das Strukturmaterial. Die Schichtdicke einer einzelnen Schicht kann 1 µm bis 20 µm betragen, insbesondere 5 µm bis 10 µm. Die Anzahl der vorgesehen Schichten (bzw. die Anzahl der Wiederholungen des Druckvorgangs für eine einzelne Schicht) kann bis 60, insbesondere bis 100 oder mehr betragen. Bei einem Aufjetten kann insbesondere ein Tröpfchenvolumen von 2 pL bis ca. 10 pL, insbesondere höchstens 6 pL verwendet werden, um eine hohe Auflösung zu erreichen. Während des schichtweisen 3D-Drucks kann eine Härtung erfolgen, beispielsweise wird jede aufgedruckte Schicht gehärtet, bevor eine nächste Schicht aufgedruckt wird. Eine Härtung kann beispielsweise über Bestrahlung etwa mit UV-Licht, über eine thermische Behandlung, chemische Behandlung und/oder Vernetzung erfolgen.

Die Prägestruktur kann relativ zur Oberfläche des Werkzeugrohlings eine Höhe von 10 µm bis 1000 µm aufweisen, insbesondere 30 µm bis 200 µm oder von 40 µm bis 100 µm. Unter der Höhe der Prägestruktur wird insbesondere die maximale oder durchschnittliche (arithmetisches Mittel) Ausdehnung der Prägestruktur entlang der Normalen der Oberfläche des Werkzeugrohlings verstanden.

In einer weiteren Ausgestaltung wird das über das 3D-Druckverfahren aufgedruckte Strukturmaterial zumindest teilweise nach dem Aufdrucken und/oder während des Aufdruckens wieder entfernt. Beispielsweise kann über ein gezieltes Entfernen des Strukturmaterials die Kontur der Prägestruktur weiter angepasst werden. Beispielsweise kann auch die Beschaffenheit der äußeren Oberfläche der Prägestruktur, welche zur Prägung des vorgegebenen Materials vorgesehen ist, angepasst werden, insbesondere hinsichtlich der Rauheit wie etwa mittlere Rauheit Rₐ und/oder gemittelte Rautiefe R_{z}. Beispielsweise kann eine Glättung oder Aufrauhung erfolgen, womit beispielsweise eine durch das 3D-Druckverfahren bereitgestellte äußere Oberfläche der Prägestruktur in Hinsicht auf eine Eignung zum Prägen und/oder zur Beschichtung verbessert wird. Insbesondere wird ein höherer Glanzgrad eingestellt. Ein Entfernen des Strukturmaterials kann insbesondere mittels einer Ablation wie einer Laserablation und/oder mittels einer chemischen Behandlung durchgeführt werden. Ebenso denkbar ist eine mechanische Behandlung zur Entfernung von Strukturmaterial.

Beispielsweise kann auch eine thermische Behandlung zur Entfernung von Strukturmaterial durchgeführt werden, wobei insbesondere Strukturmaterial aufgeweicht oder verflüssigt und entfernt wird. Hierfür kann insbesondere ein Strukturmaterial aufweisend Wachs verwendet werden. In einer weiteren Ausgestaltung des Verfahrens wird zumindest ein Teil der Bereiche der Prägestruktur, in welchen Strukturmaterial zumindest teilweise wieder entfernt wurde, durch ein Stützmaterial aufgefüllt. Dies ist insbesondere vorteilhaft, wenn das Strukturmaterial und/oder die Oberfläche des Werkzeugrohlings beschichtet wurden. Beispielsweise wird ein Strukturmaterial aufweisend Wachs verwendet und insbesondere eine metallische Beschichtung aufgebracht. Anschließend kann das Wachs über ein Erweichen oder Aufschmelzen zumindest teilweise entfernt werden, so dass die metallische Beschichtung verbleibt und die Kontur der mit dem Strukturmaterial aufgedruckten Prägestruktur wiedergibt. Die Bereiche der Prägestruktur, in welchen das Strukturmaterial entfernt wurde, werden mit Stützmaterial aufgefüllt, wobei es sich insbesondere im Vergleich zum Strukturmaterial um ein härteres und/oder temperaturbeständigeres Stützmaterial handelt. Als Stützmaterial kommen beispielsweise Metalle, deren Verbindungen und/oder Materialien auf Polymerbasis in Frage.

Gemäß der zweiten Lehre der Erfindung wird die oben genannte Aufgabe betreffend ein Prägewerkzeug zur Prägung eines vorgegebenen Materials dadurch gelöst, dass die Prägestruktur über ein 3D-Druckverfahren auf die Oberfläche aufgedrucktes Strukturmaterial umfasst.

Entsprechend den oben genannten Vorteilen und Ausgestaltungen zum Verfahren gemäß der ersten Lehre kann das Prägewerkzeug eine prozessgenaue Prägestruktur mit hoher Auflösung aufweisen und auf einfache Weise hergestellt sein. Durch das Aufdrucken von Strukturmaterial wird ebenfalls eine von den Verfahren aus dem Stand der Technik, welche auf einem Abtragen bzw. Entfernen von Material von der Oberfläche des Werkzeugrohlings beruhen, unterschiedliche Struktur erhalten.

In einer Ausgestaltung des Prägewerkzeugs ist das Prägewerkzeug als Walze, Walzenmantel und/oder Platte ausgestaltet. Entsprechende Formen sind vielseitig in Prägeverfahren verwendbar. Eine weitere Ausgestaltung insbesondere von Walzen und Walzenmanteln sind Prägewerkzeuge für ein Unionsverfahren, wobei zwei Schwesterwalzen(-mäntel) mit korrespondierenden Prägestrukturen gegenläufig zum Prägen verwendet werden.

In einer weiteren Ausgestaltung des Prägewerkzeugs ist das Prägewerkzeug für ein Heißprägen und/oder ein Kaltprägen eingerichtet. Heißprägen kann beispielsweise ein Prägen mit einer Prägewerkzeugtemperatur und/oder Temperatur des zu prägenden Materials von mehr als 100 °C bedeuten. Kaltprägen kann beispielsweise ein Prägen mit einer Prägewerkzeugtemperatur und/oder Temperatur des zu prägenden Materials von weniger als 100 °C, insbesondere weniger als 50 °C bedeuten. Das Prägewerkzeug kann bei den entsprechenden Prägetemperaturen eine Temperaturbeständigkeit aufweisen. Die Prägetemperatur kann abhängig vom vorgegeben Material gewählt werden. Ebenso kann das Prägewerkzeug für Hochddruckverfahren und/oder Niederdruckverfahren vorgesehen sein.

Als vorgegebenes Material, welches mit dem Prägewerkzeug bzw. der Prägestruktur zu prägen ist, können insbesondere flache oder bandförmige Materialien in Frage kommen, beispielsweise Platten, Folien und/oder Bänder. Vorgegebene Materialien, welche insbesondere zum Heißprägen vorgesehen sind, können Tapeten (beispielsweise aufweisend oder in Kombination mit erhitztem PVC), (Kunststoff-)Folien, beschichtete Oberflächen (beispielsweise mit Papier und/oder Acryllack), Aluminiumbänder und Aluminiumfolien, (Kunst-)Leder und/oder Laminate (beispielsweise für Fußböden) sein. Vorgegebene Materialien, welche insbesondere zum Kaltprägen vorgesehen sind, können (Kunst-)Leder, Papier, Tapeten, zellstoffbasierende Erzeugnisse (beispielsweise Tissues, Servietten, etc.) und beschichtete Produkte sein (beispielsweise mit Acryllack beschichtete Produkte).

Gemäß der dritten Lehre der Erfindung wird die oben genannte Aufgabe betreffend eine Vorrichtung zum Strukturieren einer Oberfläche für ein Prägewerkzeug dadurch gelöst, dass die Strukturierungsmittel für ein 3D-Druckverfahren zum Aufdrucken von Strukturmaterial auf den Werkzeugrohling eingerichtet sind, um eine Prägestruktur auf der Oberfläche auszubilden, wobei die Prägestruktur das über das 3D-Druckverfahren aufgedruckte Strukturmaterial umfasst.

Gemäß einer Ausgestaltung umfasst die Vorrichtung weiter Beschichtungsmittel zur Beschichtung des über das 3D-Druckverfahren aufgedruckten Strukturmaterials und/oder der Oberfläche des Werkzeugrohlings, insbesondere mittels einer elektrochemischen Behandlung. Die Beschichtungsmittel können auch Mittel zur Metallisierung umfassen.

Gemäß der dritten Lehre der Erfindung wird die oben genannte Aufgabe über eine digitale Druckvorlage gelöst, welche Informationen enthält, ein Strukturieren einer Oberfläche für ein Prägewerkzeug in einem Verfahren gemäß der ersten Lehre durchzuführen.

Beispielsweise kann das Verfahren gemäß der ersten Lehre auf einer Vorrichtung durchgeführt werden, insbesondere einer Vorrichtung gemäß der dritten Lehre, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß der ersten Lehre auszuführen und/oder zu steuern.

Die digitale Druckvorlage kann Informationen enthalten, welche beispielsweise indikativ für das Aufdrucken des Strukturmaterials sind und insbesondere vom Computerprogrammcode dafür verwendet werden, mit dem zumindest einen Prozessor zumindest ein Verfahren gemäß der ersten Lehre auszuführen. Die digitale Druckvorlage kann auf einem Speichermedium hinterlegt sein. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nichtflüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen.
- Fig. 1a-c: schematische Ansichten von strukturierten Oberflächen von Prägewerkzeugen aus dem Stand der Technik,
- Fig. 2a-d: ein Ausführungsbeispiel des erfindungsgemäßen Verfahrens und des erfindungsgemäßen Prägewerkzeugs,
- Fig. 3: ein Ausführungsbeispiel der erfindungsgemäßen Vorrichtung und
- Fig. 4: unterschiedliche Ausführungsbeispiele eines Speichermediums für eine digitale Druckvorlage gemäß der Erfindung.

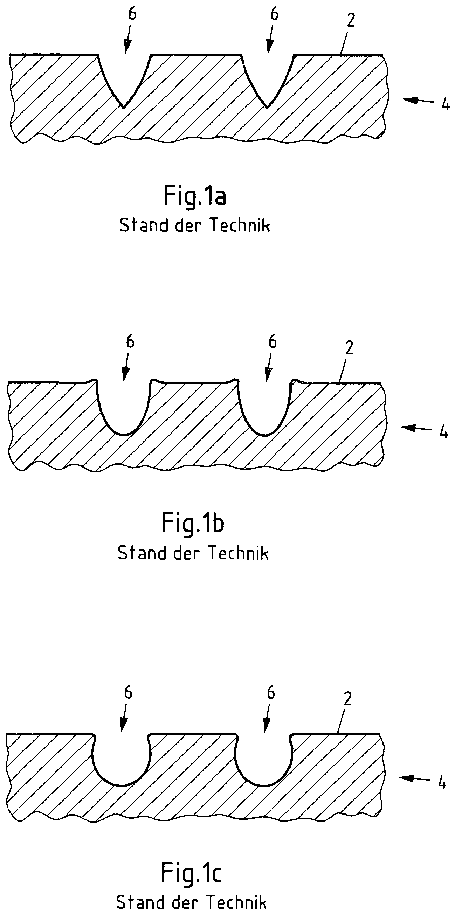

Fig. 1a-c zeigen zunächst schematische Ansichten von strukturierten Oberflächen 2 von Prägewerkzeugen 4, wie diese mittels Verfahren zur Strukturierung aus dem Stand der Technik erzeugt werden.

In Fig. 1a ist eine Oberfläche 2 gezeigt, welche eine durch eine mechanische Gravur über einen Stichel eingebrachte Struktur aufweist. Über den Stichel (nicht gezeigt) werden Vertiefungen 6 erzeugt, deren Form typischerweise durch die Form des Stichels bedingt ist und welche sich insbesondere wie in Fig. 1a gezeigt in der Tiefe verjüngt und insbesondere spitz zulaufend ausgestaltet ist.

In Fig. 1b ist eine Oberfläche 2 gezeigt, welche eine über Lasergravur bzw. direkt Laserablation eingebrachte Struktur aufweist. Mittels Laserablation wird von der Oberfläche 2 direkt Material entfernt, so dass Vertiefungen 6 erzeugt werden. Die Form der Vertiefungen 6 ist abhängig von den Eigenschaften des Materials der Oberfläche unter Einwirkung der Laserstrahlung während der Ablation und ist insbesondere wie in Fig. 1b gezeigt in der Tiefe bzw. im Tiefenprofil abgerundet.

In Fig. 1c ist eine Oberfläche 2 gezeigt, welche eine über ätztechnische Methoden eingebrachte Struktur aufweist. Auf die Oberfläche 2 wird zunächst ein Schablonenmaterial aufgebracht (nicht gezeigt) und insbesondere über eine Belichtung strukturiert und teilweise abgelöst. In den abgelösten Bereichen wird die Oberfläche 2 mit einer ätzenden Lösung angegriffen, so dass Vertiefungen 6 entstehen. Die Form der Vertiefungen 6 ist durch den Ätzangriff auf das Material der Oberfläche 2 bestimmt und ist typischerweise in der Tiefe bzw. im Tiefenprofil abgerundet. Auch können wie in Fig. 1c angedeutet Unterschneidungen der Schablone und der Oberfläche entstehen.

Den beschrieben Verfahren aus dem Stand der Technik ist gemeinsam, dass Material von der zu strukturierenden Oberfläche entfernt wird, um eine Prägestruktur bereitzustellen.

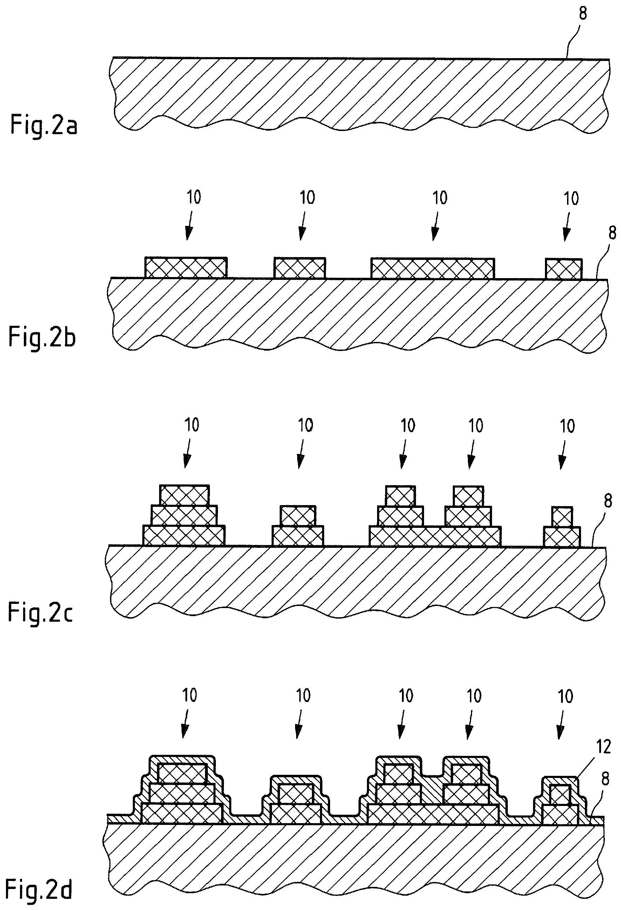

Fig. 2a-c zeigen schematische Ansichten Verfahren zum Strukturieren einer Oberfläche 8 für ein Prägewerkzeug.

In Fig. 2a ist zunächst die Oberfläche 8 eines Werkzeugrohlings vor der Strukturierung gezeigt. Die Oberfläche 8 kann beispielsweise eine metallische Oberfläche und insbesondere eine Oberfläche basierend auf Fe, Cr, Ni, Cu und/oder Zn bzw. deren Verbindungen bzw. Stahl sein. Insbesondere ist die Oberfläche 8 vernickelt. Die Oberfläche 8 ist hierbei eine Oberfläche eines Werkzeugrohlings und kann beispielsweise eine Oberfläche einer Platte, einer Walze oder eines Walzenmantels sein.

Auf der Oberfläche 8 des Werkzeugrohlings wird eine Prägestruktur ausgebildet, welche zur Prägung eines vorgegebenen Materials vorgesehen ist. Mit einem 3D-Druckverfahren wird Strukturmaterial auf den Werkzeugrohling aufgedruckt, um die Prägestruktur bereitzustellen. Das Strukturmaterial wird selektiv auf die Oberfläche gebracht. Auf der Oberfläche 8 werden damit Erhebungen 10 ausgebildet. In diesem Ausführungsbeispiel umfasst das 3D-Druckverfahren ein schichtweises Aufbringen des Strukturmaterials, wobei die Prägestruktur das über das 3D-Druckverfahren aufgedruckte Strukturmaterial umfasst.

In Fig. 2b ist die Oberfläche 8 nach einem Aufbringen einer ersten Schicht von Strukturmaterial gezeigt, wobei das Strukturmaterial Erhebungen 10 ausbildet. Das aufgebrachte Material kann metallische Materialien wie insbesondere Stahl, Nickel, Kupfer, Zink, Chrom sowie deren Legierungen und Verbundmaterialien umfassen oder hieraus bestehen, wobei auch weitere metallische Verbindungen mit Eisen, Nickel, Kupfer, Zink und/oder Chrom möglich sind. In dem dargestellten Ausführungsbeispiel wird insbesondere eine Kombination von Wachs und UV-härtbarer Tinte als Strukturmaterial für die Erhöhungen 10 über ein Drucken aufgebracht. Die Kombination von Wachs und UV-härtbarer Tinte hat hierbei eine pastöse Konsistenz, womit sich das Material einerseits prozesssicher aufdrucken lässt und andererseits auf der Oberfläche 8 nicht verläuft, so dass die Erhöhungen 10 mit einer hohen Auflösung gebildet werden können.

Das Strukturmaterial wird schichtweise aufgetragen, so dass sich insbesondere eine Prägestruktur mit einem variierenden Tiefenprofil ausbilden lässt. Hierzu ist schematisch in Fig. 2c die Oberfläche 8 aus Fig. 2b gezeigt, nachdem mehrere Schichten von Strukturmaterial aufgetragen wurden und die Erhebungen 10 weiter ausgebildet sind. Die Erhebungen 10 weisen eine Höhe von 10 µm bis 1000 µm auf, insbesondere von 30 µm bis 200 µm oder 40 µm bis 100 µm. Die Schichtdicke der einzelnen aufgebrachten Schichten beträgt von 1 µm bis 10 µm, insbesondere von 5 µm bis 10 µm. Zur Verbesserung der Genauigkeit der Prägestruktur und zur Glättung der Oberfläche des aufgedruckten Strukturmaterials kann das Strukturmaterial optional teilweise wieder entfernt werden, insbesondere mittels einer Ablation wie einer Laserablation.

Es ist denkbar, dass die derart strukturierte Oberfläche 8 mit Erhebungen 10 aus Fig. 2c bereits als Prägestruktur eines Prägewerkzeugs verwendet wird, soweit das zu prägende vorgegebene Material sich insbesondere hinsichtlich der Härte des aufgedruckten Strukturmaterials durch eine entsprechende Oberfläche prägen lässt. Insbesondere ist eine solche Verwendung denkbar, wenn metallische Strukturmaterialien auf die Oberfläche aufgebracht werden.

In dem dargestellten Ausführungsbeispiel wird in Fig. 2d die freiliegende Oberfläche 8 des Werkzeugrohlings und das Strukturmaterial bzw. die Erhebungen 10 umfassend die Kombination von Wachs und UV-härtbarer Tinte mit einer Beschichtung 12 versehen, wobei die Beschichtung 12 eine höhere Härte aufweist als das aufgedruckte Strukturmaterial. Hierdurch kann mit der Prägestruktur auch eine Prägung von härteren Materialien vorgenommen werden und die Lebensdauer des Prägewerkzeugs wird erhöht. Eine Glättung der Beschichtung kann ebenso erfolgen.

Zum Aufbringen der Beschichtung 12 können elektrochemische Methoden verwendet werden. Soweit die Oberfläche 8 und/oder das aufgedruckte Strukturmaterial bzw. die Erhebungen 10 elektrisch isolierende Eigenschaften aufweisen, kann die Oberfläche 8 und/oder das aufgedruckte Strukturmaterial bzw. die Erhebungen 10 über einen Aktivator einer elektrochemischen Behandlung zugänglich gemacht werden. Beispielsweise werden die Oberfläche 8 und das aufgedruckte Strukturmaterial einer Lösung mit einem Aktivator ausgesetzt, insbesondere in einem Bad mit einer Lösung umfassend Pd. Insbesondere wird eine elektrisch leitfähige Beschichtung aus Cu und/oder Ni aufgetragen, um eine elektrochemische Behandlung zu erleichtern. Eine elektrochemische Behandlung zur Aufbringung einer oder mehrerer Beschichtungen in Form einer Galvanisierung kann vorgenommen werden, insbesondere eine Verchromung und/oder Vernickelung.

Hierbei können mehrere Schichten aufgebracht werden, beispielsweise kann einer Verchromung und/oder Vernickelung ein Aufbringen von Cu, Zn und/oder Ni zur Verbesserung der Haftung der verchromten und/oder vernickelten Schicht vorangehen. Insbesondere wird nach dem Aufbringen einer Cu-Schicht auf die aktivierte Oberfläche 8 und/oder Erhebungen 10 eine Zn-Schicht aufgetragen und eine Vernickelung vorgenommen, so dass die äußerste Schicht der Prägestruktur von der vernickelten Schicht gebildet wird. Die derart erhaltene Prägestruktur weist dann im Wesentlichen eine vernickelte Oberfläche auf und kann für eine Prägung entsprechend harter Materialien eingesetzt werden.

In einer anderen Ausführungsform wird die Oberfläche bzw. das Strukturmaterial mit 1 µm - 10 µm Ni, vorzugsweise 2 µm bis 3 µm Ni beschichtet, und auf der Ni-Schicht eine Cr-Schicht mit einer Dicke von 1 |im bis 20 µm aufgebracht, vorzugsweise 4 µm bis 6µm. Damit wird die äußere Schicht von der Verchromung gebildet.

In einer optionalen, nicht dargestellten Ausgestaltung kann nach dem Aufbringen der Beschichtung 12 das auf die Oberfläche 8 aufgedruckte Strukturmaterial zumindest teilweise wieder entfernt werden. Dies ist insbesondere dann vorteilhaft, wenn das auf die Oberfläche aufgedruckte Strukturmaterial keine ausreichende Härte und/oder Wärmebeständigkeit für ein Prägen, insbesondere ein Heißprägen aufweist. Beispielsweise wird mit dem 3D-Druckverfahren ein Strukturmaterial umfassend ein Wachs aufgebracht, welches nach erfolgter Aufbringung der Beschichtung 12 durch ein Aufheizen erweicht bzw. aufgeschmolzen und entfernt wird. In die entstehenden Hohlräume unter der Beschichtung 12 kann ein Stützmaterial eingebracht werden, welches beispielsweise eine im Vergleich zum Wachs höhere Härte und/oder Wärmebeständigkeit aufweist.

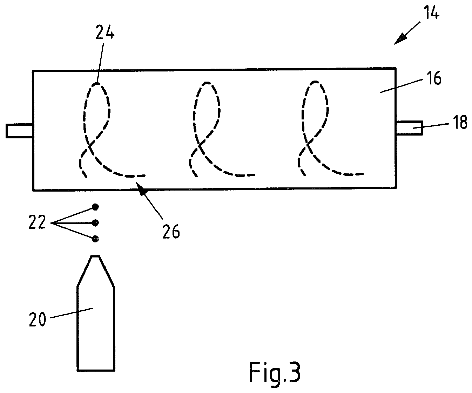

In Fig. 3 ist eine Vorrichtung 14 zum Strukturieren einer Oberfläche für ein Prägewerkzeug 16 gezeigt, wobei insbesondere das erfindungsgemäße Verfahren über die Vorrichtung durchgeführt werden kann. Die Vorrichtung umfasst ein Aufnahmemittel 18 zur Aufnahme eines Werkzeugrohlings mit einer Oberfläche und Strukturierungsmittel 20 zum Strukturieren der Oberfläche. Die Strukturierungsmittel 20 sind hierbei für ein 3D-Druckverfahren zum Aufdrucken von Strukturmaterial auf den Werkzeugrohling eingerichtet. Beispielsweise umfassen die Strukturierungsmittel 20 eine 3D-Druckvorrichtung mit einem Druckkopf, welcher selektiv Material 22 ausgeben kann, um Strukturmaterial 24 aufzudrucken. Hierdurch kann eine Prägestruktur 26 auf der Oberfläche ausgebildet werden, wobei die Prägestruktur 26 das über das 3D-Druckverfahren aufgedruckte Strukturmaterial 24 umfasst.

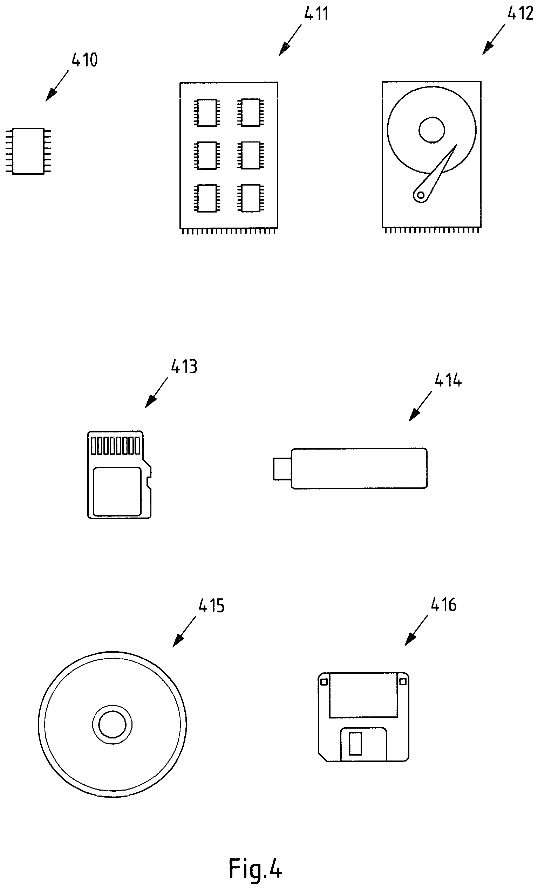

Fig.4 zeigt schließlich unterschiedliche Ausführungsbeispiele von Speichermedien, auf denen ein Ausführungsbeispiel einer digitalen Druckvorlage gespeichert sein kann, welche Informationen enthält, ein Strukturieren einer Oberfläche für ein Prägewerkzeug in einem erfindungsgemäßen Verfahren durchzuführen. Das Speichermedium kann beispielsweise ein magnetisches, elektrisches, optisches und/oder andersartiges Speichermedium sein. Das Speichermedium kann beispielsweise Teil eines Prozessors sein, beispielsweise ein (nicht-flüchtiger oder flüchtiger) Programmspeicher des Prozessors oder ein Teil davon. Ausführungsbeispiele eines Speichermediums sind ein Flash-Speicher 410, eine SSD-Festplatte 411, eine magnetische Festplatte 412, eine Speicherkarte 413, ein Memory Stick 414 (z.B. ein USB-Stick), eine CD-ROM oder DVD 415 oder eine Diskette 416.

## Patentansprüche

1. Verfahren zum Strukturieren einer Oberfläche für ein Prägewerkzeug (16),
- bei dem ein Werkzeugrohling mit einer Oberfläche (8) bereitgestellt wird und
- bei dem auf der Oberfläche (8) des Werkzeugrohlings eine Prägestruktur (26) ausgebildet wird, welche zur Prägung eines vorgegebenen Materials vorgesehen ist,
**dadurch gekennzeichnet, dass**
- mit einem 3D-Druckverfahren Strukturmaterial (24) auf den Werkzeugrohling aufgedruckt wird, um die Prägestruktur (26) bereitzustellen und
- die Prägestruktur (26) das über das 3D-Druckverfahren aufgedruckte Strukturmaterial (24) umfasst.

2. Verfahren nach Anspruch 1,
**dadurch gekennzeichnet, dass**
über das 3D-Druckverfahren aufgedruckte Strukturmaterial (24) Metall und/oder Metallverbindungen umfasst oder hieraus besteht.

3. Verfahren nach Anspruch 1 oder 2,
**dadurch gekennzeichnet, dass**
über das 3D-Druckverfahren aufgedruckte Strukturmaterial (24) einen Kunststoff, ein Wachs, eine UV-härtbare Tinte oder eine Kombination hiervon umfasst oder hieraus besteht, wobei das Strukturmaterial (24) insbesondere eine pastöse Konsistenz aufweist.

4. Verfahren nach einem der Ansprüche 1 bis 3,
**dadurch gekennzeichnet, dass**
eine Beschichtung (12) des über das 3D-Druckverfahren aufgedruckten Strukturmaterials (24) und/oder der Oberfläche (8) des Werkzeugrohlings vorgenommen wird, insbesondere mittels einer elektrochemischen Behandlung.

5. Verfahren nach einem der Ansprüche 1 bis 4,
**dadurch gekennzeichnet, dass**
die Beschichtung (12) Cr, Ni, Cu und/oder Zn umfasst.

6. Verfahren nach einem der Ansprüche 1 bis 5,
**dadurch gekennzeichnet, dass**
das 3D-Druckverfahren ein schichtweises Aufdrucken des Strukturmaterials (24) umfasst.

7. Verfahren nach einem der Ansprüche 1 bis 6,
**dadurch gekennzeichnet, dass**
die Prägestruktur (26) relativ zur Oberfläche (8) des Werkzeugrohlings eine Höhe von 10 µm bis 200 µm aufweist, insbesondere von 30 µm bis 100 µm.

8. Verfahren nach einem der Ansprüche 1 bis 7,
**dadurch gekennzeichnet, dass**
über das 3D-Druckverfahren aufgedruckte Strukturmaterial (24) zumindest teilweise nach dem Aufdrucken und/oder während des Aufdruckens wieder entfernt wird, insbesondere mittels einer Ablation, einer thermischen Behandlung und/oder einer chemischen Behandlung.

9. Verfahren nach Anspruch 8,
**dadurch gekennzeichnet, dass**
zumindest ein Teil der Bereiche der Prägestruktur (26), in welchen Strukturmaterial (24) zumindest teilweise wieder entfernt wurde, durch ein Stützmaterial aufgefüllt werden.

10. Prägewerkzeug (16) zur Prägung eines vorgegebenen Materials, wobei das Prägewerkzeug (16) insbesondere über ein Verfahren nach einem der Ansprüche 1 bis 9 strukturiert wurde,
- mit einer auf einer Oberfläche (8) ausgebildeten Prägestruktur (26), welche zur Prägung eines vorgegebenen Materials vorgesehen ist,
**dadurch gekennzeichnet, dass**
- die Prägestruktur (26) über ein 3D-Druckverfahren auf die Oberfläche (8) aufgedrucktes Strukturmaterial (24) umfasst.

11. Prägewerkzeug (16) nach Anspruch 10,
**dadurch gekennzeichnet, dass**
das Prägewerkzeug (16) als Walze, Walzenmantel und/oder Platte ausgestaltet ist.

12. Prägewerkzeug (16) nach Anspruch 10 oder 11,
**dadurch gekennzeichnet, dass**
das Prägewerkzeug (16) für ein Heißprägen und/oder ein Kaltprägen eingerichtet ist.

13. Vorrichtung (14) zum Strukturieren einer Oberfläche für ein Prägewerkzeug (16), insbesondere unter Anwendung des Verfahrens nach einem der Ansprüche 1 bis 11 die Vorrichtung umfassend:
- Aufnahmemittel (18) zur Aufnahme eines Werkzeugrohlings mit einer Oberfläche (8),
- Strukturierungsmittel (20) zum Strukturieren der Oberfläche,
**dadurch gekennzeichnet, dass**
- die Strukturierungsmittel (20) für ein 3D-Druckverfahren zum Aufdrucken von Strukturmaterial (24) auf den Werkzeugrohling eingerichtet sind, um eine Prägestruktur (26) auf der Oberfläche auszubilden, wobei die Prägestruktur (26) das über das 3D-Druckverfahren aufgedruckte Strukturmaterial (24) umfasst.

14. Vorrichtung (14) nach Anspruch 13, weiter umfassend Beschichtungsmittel zur Beschichtung des über das 3D-Druckverfahren aufgedruckten Strukturmaterials (24) und/oder der Oberfläche (8) des Werkzeugrohlings, insbesondere mittels einer elektrochemischen Behandlung.

15. Digitale Druckvorlage, welche Informationen enthält, ein Strukturieren einer Oberfläche für ein Prägewerkzeug (16) in einem Verfahren nach einem der Ansprüche 1 bis 9 durchzuführen.

## Geänderte Patentansprüche

### Geänderte Patentansprüche gemäss Regel 137(2) EPÜ.

1. Verfahren zum Strukturieren einer Oberfläche für ein Prägewerkzeug (16),
- bei dem ein Werkzeugrohling mit einer Oberfläche (8) bereitgestellt wird und
- bei dem auf der Oberfläche (8) des Werkzeugrohlings eine Prägestruktur (26) ausgebildet wird, welche zur Prägung eines vorgegebenen Materials vorgesehen ist, wobei
- mit einem 3D-Druckverfahren Strukturmaterial (24) auf den Werkzeugrohling aufgedruckt wird, um die Prägestruktur (26) bereitzustellen und
- die Prägestruktur (26) das über das 3D-Druckverfahren aufgedruckte Strukturmaterial (24) umfasst
**dadurch gekennzeichnet, dass**
- über das 3D-Druckverfahren aufgedruckte Strukturmaterial eine Kombination aus einem Kunststoff, einem Wachs und/oder einer UV-härtbaren Tinte umfasst.

2. Verfahren nach Anspruch 1,
**dadurch gekennzeichnet, dass**
über das 3D-Druckverfahren aufgedruckte Strukturmaterial (24) zumindest teilweise nach dem Aufdrucken und/oder während des Aufdruckens wieder entfernt wird, insbesondere mittels einer Ablation, einer thermischen Behandlung und/oder einer chemischen Behandlung.

3. Verfahren nach Anspruch 2,
**dadurch gekennzeichnet, dass**
zumindest ein Teil der Bereiche der Prägestruktur (26), in welchen Strukturmaterial (24) zumindest teilweise wieder entfernt wurde, durch ein Stützmaterial aufgefüllt werden.

4. Verfahren zum Strukturieren einer Oberfläche für ein Prägewerkzeug (16),
- bei dem ein Werkzeugrohling mit einer Oberfläche (8) bereitgestellt wird und
- bei dem auf der Oberfläche (8) des Werkzeugrohlings eine Prägestruktur (26) ausgebildet wird, welche zur Prägung eines vorgegebenen Materials vorgesehen ist, wobei
- mit einem 3D-Druckverfahren Strukturmaterial (24) auf den Werkzeugrohling aufgedruckt wird, um die Prägestruktur (26) bereitzustellen und
- die Prägestruktur (26) das über das 3D-Druckverfahren aufgedruckte Strukturmaterial (24) umfasst
**dadurch gekennzeichnet, dass**
- über das 3D-Druckverfahren aufgedruckte Strukturmaterial (24) zumindest teilweise nach dem Aufdrucken und/oder während des Aufdruckens wieder entfernt wird und
- zumindest ein Teil der Bereiche der Prägestruktur (26), in welchen Strukturmaterial (24) zumindest teilweise wieder entfernt wurde, durch ein Stützmaterial aufgefüllt werden.

5. Verfahren nach einem der Ansprüche 1 bis 4,
**dadurch gekennzeichnet, dass**
über das 3D-Druckverfahren aufgedruckte Strukturmaterial (24) Metall und/oder Metallverbindungen umfasst.

6. Verfahren nach einem der Ansprüche 1 bis 5,
**dadurch gekennzeichnet, dass**
das Strukturmaterial (24) eine pastöse Konsistenz aufweist.

7. Verfahren nach einem der Ansprüche 1 bis 6,
**dadurch gekennzeichnet, dass**
eine Beschichtung (12) des über das 3D-Druckverfahren aufgedruckten Strukturmaterials (24) und/oder der Oberfläche (8) des Werkzeugrohlings vorgenommen wird, insbesondere mittels einer elektrochemischen Behandlung.

8. Verfahren nach einem der Ansprüche 1 bis 7,
**dadurch gekennzeichnet, dass**
das 3D-Druckverfahren ein schichtweises Aufdrucken des Strukturmaterials (24) umfasst.

9. Verfahren nach einem der Ansprüche 1 bis 8,
**dadurch gekennzeichnet, dass**
die Prägestruktur (26) relativ zur Oberfläche (8) des Werkzeugrohlings eine Höhe von 10 µm bis 200 µm aufweist, insbesondere von 30 µm bis 100 µm.

10. Prägewerkzeug (16) zur Prägung eines vorgegebenen Materials, wobei das Prägewerkzeug (16) insbesondere über ein Verfahren nach einem der Ansprüche 1 bis 9 strukturiert wurde,
- mit einer auf einer Oberfläche (8) ausgebildeten Prägestruktur (26), welche zur Prägung eines vorgegebenen Materials vorgesehen ist,
**dadurch gekennzeichnet, dass**
- die Prägestruktur (26) über ein 3D-Druckverfahren auf die Oberfläche (8) aufgedrucktes Strukturmaterial (24) umfasst.

11. Prägewerkzeug (16) nach Anspruch 10,
**dadurch gekennzeichnet, dass**
das Prägewerkzeug (16) als Walze, Walzenmantel und/oder Platte ausgestaltet ist.

12. Prägewerkzeug (16) nach Anspruch 10 oder 11,
**dadurch gekennzeichnet, dass**
das Prägewerkzeug (16) für ein Heißprägen und/oder ein Kaltprägen eingerichtet ist.

13. Vorrichtung (14) zum Strukturieren einer Oberfläche für ein Prägewerkzeug (16) unter Anwendung des Verfahrens nach einem der Ansprüche 1 bis 9 die Vorrichtung umfassend:
- Aufnahmemittel (18) zur Aufnahme eines Werkzeugrohlings mit einer Oberfläche (8),
- Strukturierungsmittel (20) zum Strukturieren der Oberfläche,
**dadurch gekennzeichnet, dass**
- die Strukturierungsmittel (20) für ein 3D-Druckverfahren zum Aufdrucken von Strukturmaterial (24) auf den Werkzeugrohling eingerichtet sind, um eine Prägestruktur (26) auf der Oberfläche auszubilden, wobei die Prägestruktur (26) das über das 3D-Druckverfahren aufgedruckte Strukturmaterial (24) umfasst.

14. Vorrichtung (14) nach Anspruch 13, weiter umfassend Beschichtungsmittel zur Beschichtung des über das 3D-Druckverfahren aufgedruckten Strukturmaterials (24) und/oder der Oberfläche (8) des Werkzeugrohlings, insbesondere mittels einer elektrochemischen Behandlung.

15. Digitale Druckvorlage, welche Informationen enthält, ein Strukturieren einer Oberfläche für ein Prägewerkzeug (16) in einem Verfahren nach einem der Ansprüche 1 bis 9 durchzuführen.
